# EUROPEAN PATENT APPLICATION

(11) **EP 4 494 464 A1**
(43) Date of publication of application: **22.01.2025**
(21) Application number: 24188425.3
(22) Date of filing: 12.07.2024
(51) Int. Cl.: A01K 97/06, B65H 75/14, A01K 87/00, A01K 97/08

(54) **A WRAP APPARATUS FOR FISHING**

(30) Priority: 21.07.2023 GB 202311202
(71) Applicant: Urban Frog Tackle Ltd, Maldon Essex CM9 8SN (GB)
(72) Inventor: Saunders, Spencer, Essex, CM9 (GB)
(74) Representative: Fry, David John

(57) **Abstract**

A wrap apparatus for imparting moisture into a spooled fishing line (36), monofilament or braid, the apparatus comprising: an elongate strip (2) made from an elastic water-resistant material and having: a first side (11) having female fastening means (12) at least partially covering its surface; a second side (8) having a layer of water absorbent material (14) at least partially covering its surface; the second side having male fastening means (26) at or near one end.

## Description

### Field of the Invention

The present invention relates to a wrap apparatus for imparting moisture into spooled fishing line, monofilament and braid.

### Background to the Invention

Engaging in angling, whether in freshwater or marine environments, necessitates the integration of tradition, strategy, and proficiency. Yet, even the most experienced anglers confront a myriad of recurring challenges, which encompass maintaining the line in an optimal condition, ensuring the safety of other anglers, and facilitating a constant saturated pressure of the line throughout installation. These challenges are especially prevalent with the use of secondary fishing rods, such as but not limited to rods used for baiting Spombs, Spods, and sling shot for ground baiting, rods used for feature finding and marker float use, but also standard fishing lines where bite indication from non-stretching lines such as braid or braided lines are required or sought.

One of the critical issues centres on the fishing line's performance when submerged and braided reel line with its inherent absorption difficulties and casting difficulties. In both freshwater and saltwater angling, the desirability of a limp line is well-recognised. This flexibility facilitates the line's adaptability to the underwater topography and minimises its visibility to the targeted species. However, achieving homogeneous water absorption along the line during an angling session remains a pervasive challenge. Inconsistencies in water absorption can precipitate irregular casting dynamics, while insufficient absorption may result in the line's undesirable buoyancy.

The incongruities in water absorption culminate in weight disparities along the line, unsettling the casting cadence and diminishing line responsiveness. Additionally, they may cause the line to become suspended within the water column, thereby disturbing aquatic life and eliciting spurious bites or false alarms. These inconsistencies not only undermine the likelihood of a successful catch but also detract from the overall satisfaction derived from the angling experience.

An associated concern pertains to line management during casting and reeling operations. The line is susceptible to curling around the rod tip or reel during angling (known as trapping) or encircling the rod rings throughout casting. Such entanglements not only disrupt the angling activity but also pose a risk of inflicting damage to the line and the rod's delicate components. Furthermore, trapping often causes the line or braid to tangle, which may lead to the line snapping and ejecting the end or terminal tackle, posing potential harm to other anglers.

During periods of non-use or transit, the reel handle is vulnerable to damage or loss, introducing additional complications. Moreover, when deploying a bait boat or baiting pole, the extraction of the line from the spool requires careful management to prevent line looping, potential damage or entanglement and accidental spillage of the bait payload.

Lastly, the reel spool, spool lip, and the line itself necessitate protection during non-use or storage periods. The line must be shielded from accidental damage, calling for a means of encapsulating and protecting the line, even in its wet state. Post-use, the line ideally should be permitted to dry prior to storage, a task that can be cumbersome without the appropriate tool or accessory.

The present invention addresses these issues by providing a wrap apparatus for hydrating/soaking fishing line, monofilament or braid, for securing a reel handle in place when not in use, for controlling/guiding a line during baiting, installing a new line onto a reel and for protecting the reel when not in use.

### Summary of the Invention

This invention provides wrap apparatus for imparting moisture into a spooled fishing line, monofilament or braid, the apparatus comprising:
an elongate strip made from an elastic water-resistant material and having:
i. a first side having female fastening means at least partially covering its surface;
ii. a second side having a layer of water absorbent material at least partially covering its surface;
iii. the second side having male fastening means at or near one end.

Preferably, a wrap apparatus further comprising:
a second elongate strip made from an elastic water-resistant material and extending substantially perpendicularly from said first end of the first elongate strip, and having:
i. a first side on a colinear horizontal plane with the second side of the first strip and having female fastening means at least partially covering its surface; and
ii. a second side having male fastening means at or near its distal end.

Preferably, a wrap apparatus, wherein the second elongate strip comprises:
first and second segments being:
   i. positioned perpendicular to one-another;
and wherein,
   i. the first segment traverses a length of the first elongate strip; and
   ii. the second segment traverses at least part of the width of the first elongate strip and extends therefrom.

Preferably, a wrap apparatus comprising a third elongate strip comprising:
i. a first side which is at least partially covered by an absorbent material; and
ii. a second side which is at least partially covered by a male fastening means;
and whereby,
i. the third elongate strip is reversibly fixed to the second elongate strip by said male fastening means and female fastening means upon the first side of the second elongate strip.

Preferably, a wrap apparatus wherein the female and male fastening means are comprised of loop Velcro and hook Velcro fastening means respectively.

Preferably, a wrap apparatus wherein the elongate strips comprises neoprene.

Preferably, a wrap apparatus wherein the absorbent material comprises towelling material.

Preferably, a method of securing a reel handle using the wrap apparatus, the method comprising the steps of:
securing the first elongate strip about a curved face of a reel; wherein:
   the female fastening means of the first side of said elongate strip is fixed to the male fastening means of the second side of the same first elongate strip; and
the second elongate strip secures the reel handle relative to the reel; wherein:
   the second elongate strip is fastened about a reel handle and secured by fixing the female fastening means of the first side of second elongate strip to the male fastening means of the second side of the same second elongate strip.

Preferably, a method of protecting a reel using the wrap apparatus, the method comprising the steps of:
securing the first elongate strip about the curved face of a reel; wherein:
   the female fastening means of the first side of said elongate strip is fixed to the male fastening means of the second side of the same first elongate strip; and
the second elongate strip further protects the reel; and wherein:
   the second elongate strip secured about the flat faces of a reel and secured by fixing the female fastening means of the first side of second elongate
   strip to the male fastening means of the second side of the same second elongate strip.

Preferably, a method of controlling and guiding a fishing line using the wrap apparatus, the method comprising the steps of:
securing the first elongate strip about the curved face of a reel; wherein:
   the female fastening means of the first side of said elongate strip is fixed to the male fastening means of the second side of the same first elongate strip;
and wherein,
   the fishing line is threaded between the secured first elongate strip and reel; and
the tension of the first elongate strip is modifiable relative to the fixing point of the female fastening means of the first side of said elongate strip and male fastening means of the second side;
and wherein,
said tension modulates the friction and therefore effort of the fishing line leaving the spool.

Preferably, a method of installing new line onto a reel using the wrap apparatus, the method comprising steps of:
securing the second elongate strip about a first distal rod eye leg; wherein:
   the female fastening means of the first side of the second elongate strip fastened to the male fastening means of the second side of the same elongate strip; and
the first elongate strip is fastened about a fishing rod and fishing line, located between a first distal and second proximal rod eye leg; wherein:
   the rod eye legs are relative to the reel; and
   the tension of the first elongate strip is modifiable relative to the fixing point of the female fastening means of the first side of said elongate strip and male fastening means of the second side; whereby,
adjusting the distance between the first distal rod eye leg and first elongate strip modifies the tension of the fishing line; whereby,
   a greater distance between the first distal rod eye leg and the first elongate strip increases tension of the fishing line.

Preferably, a method of saturating fishing line, monofilament or braid using the wrap apparatus, the method comprising the steps of:
saturating a third elongate strip in water;
fastening the male fastening means of the second side of a third elongate strip to the first side of the first segment of the second elongate strip; wherein
   the third elongate strip, first segment of the second elongate strip and the first elongate strip are fastened in a stacked configuration whereby;
the first elongate strip is secured about the face of a reel; wherein:
   the female fastening means of the first side of said elongate strip is fixed to the male fastening means of the second side of the same first elongate strip;
   the configuration forming a watertight seal about the rim and the skirt of a reel; whereby:
water is able to ingress into the fishing line, monofilament or braid, spooled on the reel from the saturated absorbent material of the third elongate strip.

### Brief description of drawings

The invention will now be described by way of example only with reference to the accompanying diagrammatic drawings in which: -
Figure 1 is a perspective view of the inside face of the wrap apparatus in accordance with the invention, with towelling attached;
Figure 2 is a first perspective view A of the outside face of the illustrated wrap apparatus and a second perspective view B of the inside face of the wrap apparatus, with towelling detached;
Figure 3 shows an assembly of the illustrated wrap apparatus in a first perspective view A of the outside face and a second perspective view B of the inside faces of the said wrap apparatus;
Figure 4 is a first perspective view A of the outside face of a towelling strip and a second perspective view B of the inside face of said towelling strip;
Figure 5 illustrates a first perspective view A of the outside face of the third body portion of the wrap apparatus and a second perspective view B of the inside face of the third body portion of the wrap apparatus;
Figure 6 illustrates the wrap apparatus secured about a reel, with the fishing line threaded between the apparatus and reel.
Figure 7 illustrates the wrap secured about a rod eye leg and fishing rod, with the fishing line ligated by said apparatus.
Figure 8 illustrates the wrap apparatus secured about a reel handle.
Figure 9 illustrates the wrap apparatus when in an open configuration, wherein; a towelling material is being secured about the reel and spool.
Figure 10 illustrates the wrap apparatus protecting a reel for transport and storage.

### Detailed description of the invention

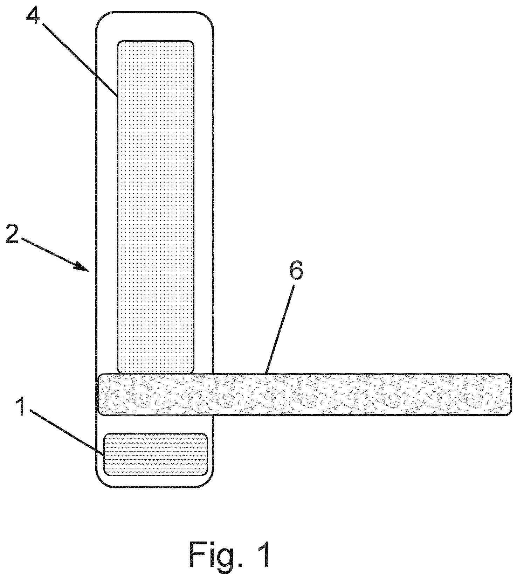

In the drawings, Figures 1-5 illustrate a wrap apparatus in accordance with the invention which comprises first 2, second 6 and third elongate 4 strips wherein, the third elongate strip 4 is detachable.

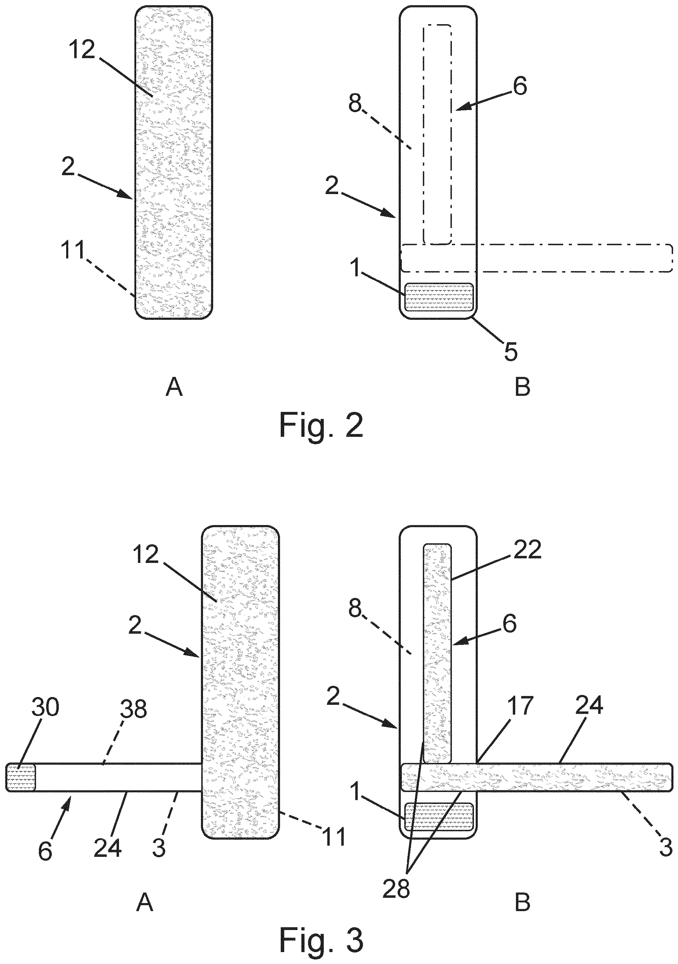

The first elongate strip 2, shown in Figure 2, comprises of a second side 8 comprised of an elastic neoprene strip, wherein, the first side 11 of said neoprene strip is at least partially covered by a Velcro loop fastener material 12. The second side 8 of said first elongate strip 2 comprises a Velcro hook fastener material 1 at a first terminus 5. The second side 8 of said neoprene strip is affixed to the second elongate strip 6 wherein; the first side 3 of the second elongate strip 6 is on a colinear horizontal plane with the second side 8 of the first elongate strip 2. Whereby, collinear horizontal plane describes the first side 3 of the second elongate strip 6 and second side 8 of the first elongate strip 2 are orientated to face the same direction.

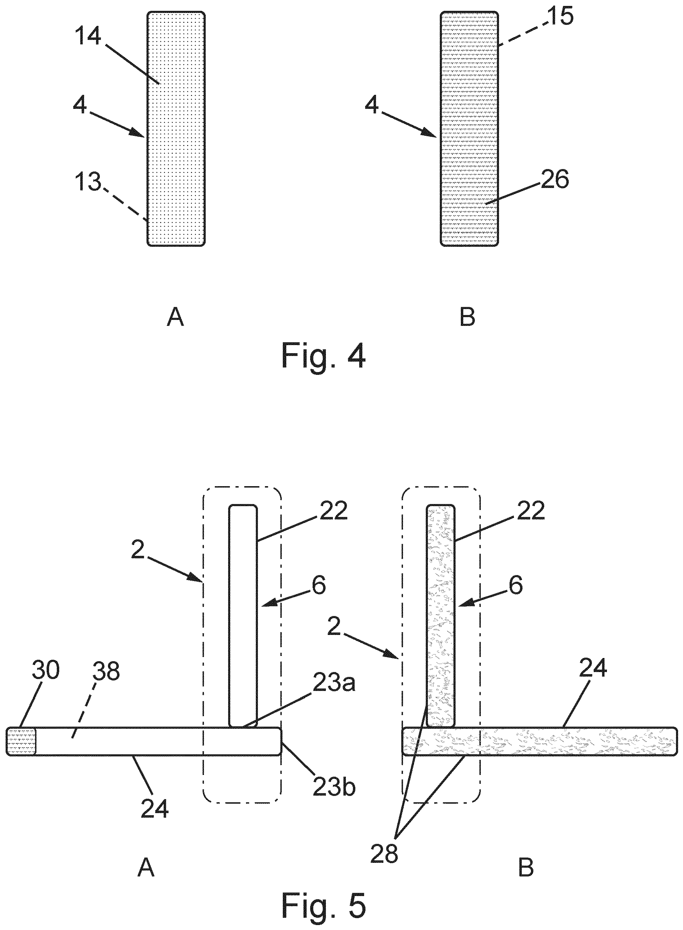

The third elongate strip 4, shown in Figure 4, comprises a first side 13 which is at least partially covered by an absorbent towelling material strip 14. The absorbent towelling material strip 14 is affixed to a second side 15 which is at least partially covered by a Velcro hook fastener material 26. Whereby, the third elongate strip 4 can reversibly be affixed to the second elongate strip 6 by said Velcro hook fastener material 26 and Velcro loop fastener material 28 upon the first side 3 of the second elongate strip 6.

The second elongate strip 6, shown in Figure 5, is comprised of a first 22 and second 24 segment characterised by two neoprene strips, organised perpendicular to one-another and intercept substantially near their respective first terminals 23a, 23b. Wherein, the first segment 22 traverses a length of the first elongate strip, conducive in length to the third elongate strip 4 and the second segment 24 traverses the width of the first elongate strip 2 and extends therefrom.

Wherein, the entirety of the first side 3 of said first 22 and second 24 segments is at least partially covered by Velcro loop faster material 28, whereby, the reciprocal Velcro hook faster material 26 of the third elongate strip 4 can be reversibly affixed to the second elongate strip 6.

The entirety of the second side 38 of the first segment 22 of the second elongate strip 6 is affixed to the second side 8 first elongate strip 2.

The second segment 24 of the second elongate strip 6 and the first elongate strip 2 are affixed along their intersection upon their second sides 38, 8 respectively. The first terminus 23b of the second segment 24 is substantially perpendicular to the lengthwise edge of the first elongate strip 2.

The second segment 24 of the second elongate strip 6 extends in one direction, perpendicular to the length of the first elongate strip 2, from the affixed intersection 17 with the first elongate strip 2.
the second segment 24 of the second elongate strip 6 comprises a Velcro hook fastener 30 located at its second terminus 43 upon the second side 38, whereby, said second segment 24 can fold and fasten to the Velcro loop fastening material 12 of the first side 11 of the first elongate strip 2 and/or the Velcro loop fastening material 28 upon the first side 3 of the second elongate strip 6.

A plurality of configurations of the wrap, allows for the ligation of the three elongate strips 2,4,6 in a secure configuration, either around the fishing reel 32, rod 34 and rod eye leg 50. By virtue of said ligation and durability of component materials, the said apparatus provides a protective configuration for rod 34 or reel 32, which enhances soaking of the fishing line 36, reel handle 52 securement, bait pole/boat line guidance, line installation onto the reel 32 and spool and the storage of said reel 32 and spool. Furthermore, configurations pertaining to securement about the rod eye leg 50 aid line re-spooling.

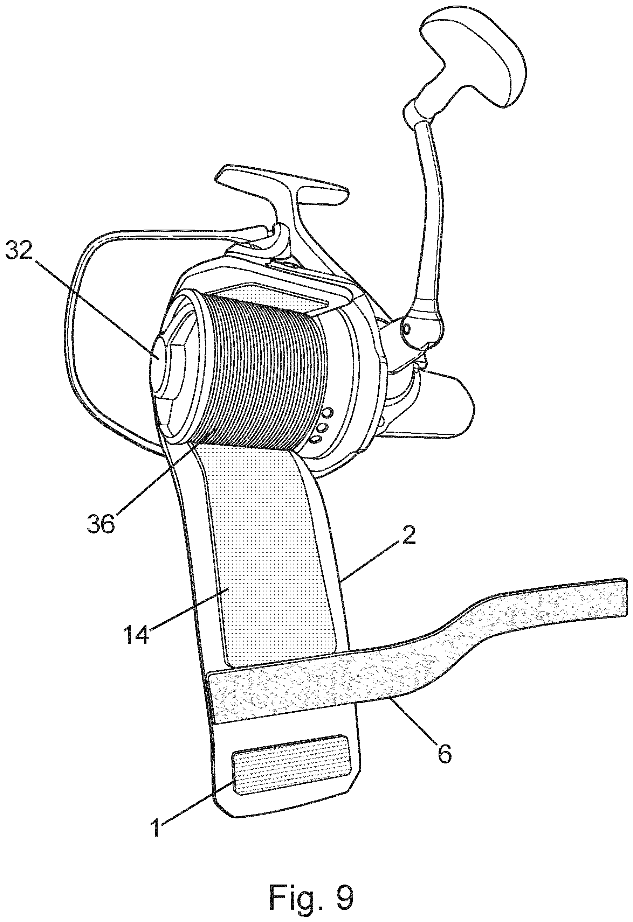

In its first configuration, as illustrated in Figure 9, the invention serves as a neoprene wrap specifically designed to encapsulate a fishing reel 32 and spool, thus addressing the issue of uneven water absorption in fishing lines 36, monofilaments, or braids.

Internally, this wrap securely houses an absorbent towelling strip 14 via a Velcro hook and loop fastening system. Wherein; the Velcro hook fastening means 26 of the second side 15 of the soaked third elongate strip 4 is fastened to the first side 3 of the first segment 22 of the second elongate strip 6. Following, the first elongate strip 2 is secured about the curved face of a reel 32, forming a watertight seal about the rim and skirt of the reel 32.

The first elongate strip 2 is secured about the reel 32 by fastening of the Velcro loop fastening material 12 of the first elongate strip 2 to the Velcro hook fastening 1 means of the second side 8 of the same first elongate strip.

When wrapped around the reel 32 and spool and saturated with water, this wrap apparatus enables controlled moisture transfer to the fishing line 36, resulting in a more pliant, water-saturated line. Wherein; the elastic potential of the first elongate strip 2 is sufficient to form a water-tight about the reel rim and skirt with the respect to the first elongate strip 2. Said tension expulses absorbed water from the absorbent towelling strip 14 into the spooled fishing line 36, braid or monofilament. This configuration improves sub-surface line adherence, reduces spurious bites, and mitigates potential fishing disturbances such as false alarm bleeps and line curling around the rod tip or reel.

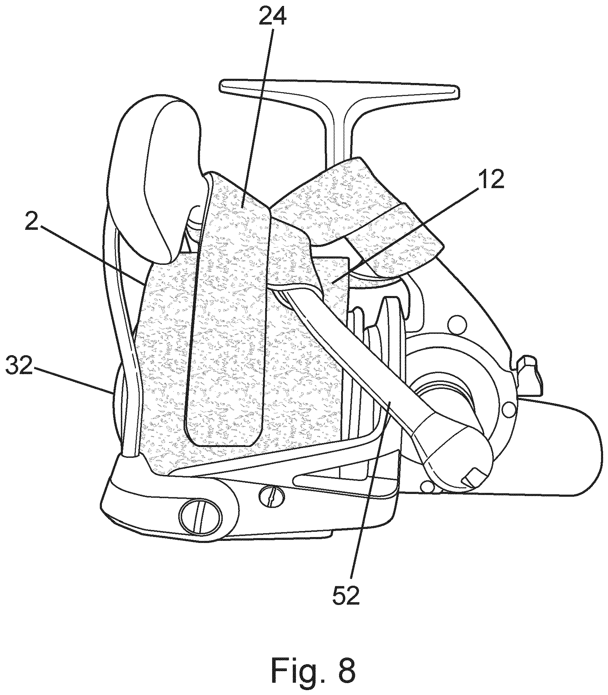

Figure 8 illustrates a second configuration; the supplementary neoprene strip is utilised to secure the reel handle 52 during non-use and transit. Wherein; the first elongate strip 2 is secured about the reel 32, whereby; the Velcro loop material 12 of the first side 11 of said elongate strip 2 is fastened to the Velcro hook material 1 of the second side 8 of the same elongate strip 2. The second elongate strip 6 secures the reel handle 52 relative to the reel 32, whereby; the second segment 24 of the second elongate strip 6 is tied about the reel handle 52 and secured by fastening the Velcro loop material 28 of the first side 3 of the second elongate strip 24 to the Velcro hook fastening means 30 of the second side 38 of the same elongate strip. This application resolves the potential issue of damage or loss to the reel handle during periods of inactivity or transportation, thus enhancing the longevity and preservation of the fishing reel.

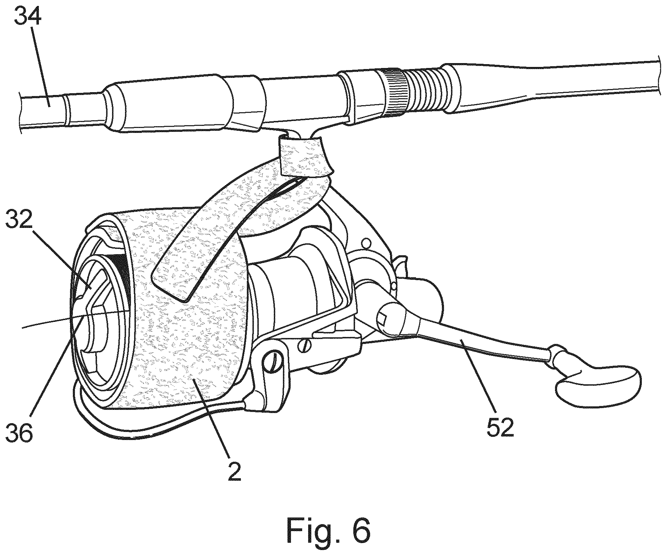

A third configuration in Figure 6 is described, the invention resolves issues of line looping and entanglement during baiting procedures. During operations involving a bait boat or baiting pole, the inventive wrap allows a controlled degree of loosening around the reel 32 spool, permitting guided and controlled removal of the line 36. Wherein; the first elongate strip 2 is secured about the reel 32, whereby; the Velcro loop material 12 of the first side 11 of said elongate strip 2 is fastened to the Velcro hook material 1 of the second side 8 of the same elongate strip 2. The fishing line 36 is threaded between the secured first elongate strip 2 and the reel 34. This feature enables the safe and secure guidance of the line 36 from the reel 32 and spool, allowing the angler to concentrate on the baiting operation without the distraction of managing line entanglement or damage.

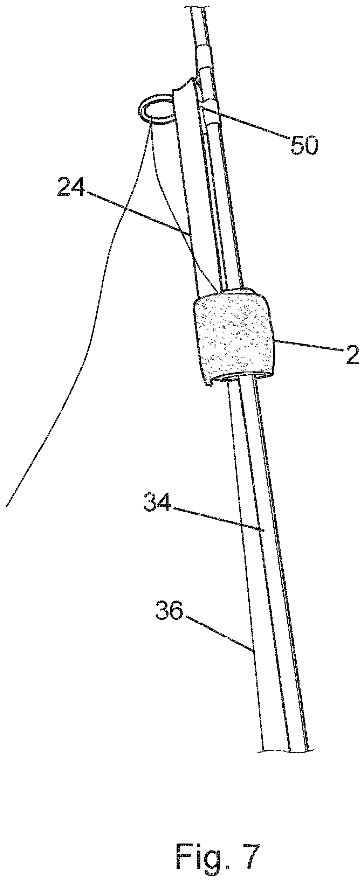

The fourth configuration, as described in Figure 7, of the invention addresses the challenge of installing new line 36 onto the reel 32 and spool. The inventive wrap is designed to envelope the fishing rod section 34 below the first rod eye 50, maintaining tension in the fishing line 36. Wherein; the second segment 24 of the second elongate strip 6 is tied about a first distal rod eye leg 50, whereby; the Velcro loop fastening means 12 of the first side 11 of the second elongate strip 6 fastens to the Velcro hook fasting material 30 of the second side 38 of the same elongate strip 6. The first elongate strip 2 is secured about the fishing rod 34 and fishing line 36, located between a first distal 50 and second proximal rod eye leg [not shown], whereby; adjusting the distance between the first distal rod eye leg 50 and first elongate strip 2 modifies the tension of the fishing line 36. The first elongate strip 2 being secured about the fishing line 36 and rod 34 wherein; the Velcro loop material 12 of the first side 11 of said elongate strip 2 is fastened to the Velcro hook material 1 of the second side 8 of the same elongate strip 2. This innovative design eliminates the need for one-handed reel operation, facilitating dual-handed control and enabling the angler to monitor and adjust line straightness until all kinks are removed.

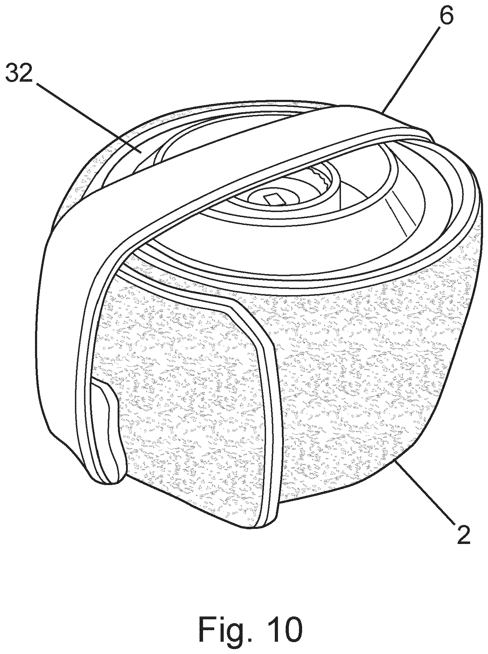

In its final configuration, described in Figure 10, the wrap apparatus serves to protect the reel 32 and spool during storage or transportation, addressing the problem of potential accidental damage to the reel 32, spool and line 36. Wherein; the first elongate strip 2 is secured about the reel 32, whereby; the Velcro loop material 12 of the first side 11 of said elongate strip 2 is fastened to the Velcro hook material 1 of the second side 8 of the same elongate strip 2. The second elongate strip 6, can be fastened about the reel 32, perpendicular to the direction the first elongate strip 2 is fastened. The wrap acts as a protective shield for the reel 32, reel body, spool, spool lip, and line. The towelling strip 14 can be detached and dried after use, then reattached for storage, ensuring a clean and safe reel 32, spool and line for subsequent use. Should the need arise, soiled towelling strips 14 can be laundered and replaced, thus preserving the integrity and functionality of the invention over time.

It will be appreciated that the forgoing is merely exemplary of wrap apparatus in accordance with the invention and that modifications can readily be made thereto without departing from the true scope of the invention as set out in the appended claims.

## Claims

1. A wrap apparatus for imparting moisture into a spooled fishing line, monofilament or braid, the apparatus comprising:
an elongate strip made from an elastic water-resistant material and having:
a first side having female fastening means at least partially covering its surface;
a second side having a layer of water absorbent material at least partially covering its surface;
the second side having male fastening means at or near one end.

2. A wrap apparatus as claimed in claim 1, the apparatus further comprising:
a second elongate strip made from an elastic water-resistant material and extending substantially perpendicularly from said first end of the first elongate strip, and having:
a first side on a colinear horizontal plane with the second side of the first strip and having female fastening means at least partially covering its surface; and
a second side having male fastening means at or near its distal end.

3. A wrap apparatus as claimed in claim 2, wherein the second elongate strip comprises:
first and second segments being:
positioned perpendicular to one-another;
and wherein,
the first segment traverses a length of the first elongate strip; and
the second segment traverses at least part of the width of the first elongate strip and extends therefrom.

4. A wrap apparatus as claimed in any of the claims 1-3 comprising a third elongate strip comprising:
a first side which is at least partially covered by an absorbent material; and
a second side which is at least partially covered by a male fastening means;
and whereby,
the third elongate strip is reversibly fixed to the second elongate strip by said male fastening means and female fastening means upon the first side of the second elongate strip.

5. A wrap apparatus as claimed in any of the preceding claims wherein the female and male fastening means are comprised of loop Velcro and hook Velcro fastening means respectively.

6. A wrap apparatus as claimed in any of the preceding claims wherein the elongate strips comprises neoprene.

7. A wrap apparatus as claimed in any of the preceding claims wherein the absorbent material comprises towelling material.

8. A method of securing a reel handle using the wrap apparatus as claimed in of any one of claims 2 to 7, the method comprising the steps of:
securing the first elongate strip about a curved face of a reel; wherein:
the female fastening means of the first side of said elongate strip is fixed to the male fastening means of the second side of the same first elongate strip; and
the second elongate strip secures the reel handle relative to the reel; wherein:
the second elongate strip is fastened about a reel handle and secured by fixing the female fastening means of the first side of second elongate strip to the male fastening means of the second side of the same second elongate strip.

9. A method of protecting a reel using the wrap apparatus of any one of claims 1 to 7, the method comprising the steps of:
securing the first elongate strip about the curved face of a reel; wherein:
the female fastening means of the first side of said elongate strip is fixed to the male fastening means of the second side of the same first elongate strip; and
the second elongate strip further protects the reel; and wherein:
the second elongate strip secured about the flat faces of a reel and secured by fixing the female fastening means of the first side of second elongate strip to the male fastening means of the second side of the same second elongate strip.

10. A method of controlling and guiding a fishing line using the wrap apparatus of any one of claims 1 to 7, the method comprising the steps of:
securing the first elongate strip about the curved face of a reel; wherein:
the female fastening means of the first side of said elongate strip is fixed to the male fastening means of the second side of the same first elongate strip;
and wherein,
the fishing line is threaded between the secured first elongate strip and reel; and
the tension of the first elongate strip is modifiable relative to the fixing point of the female fastening means of the first side of said elongate strip and male fastening means of the second side;
and wherein,
said tension modulates the friction and therefore effort of the fishing line leaving the spool.

11. A method of installing new line onto a reel using the wrap apparatus as claimed in any one of claims 2 to 7 the method comprising steps of:
securing the second elongate strip about a first distal rod eye leg; wherein:
the female fastening means of the first side of the second elongate strip fastened to the male fastening means of the second side of the same elongate strip; and
the first elongate strip is fastened about a fishing rod and fishing line, located between a first distal and second proximal rod eye leg; wherein:
the rod eye legs are relative to the reel; and
the tension of the first elongate strip is modifiable relative to the fixing point of the female fastening means of the first side of said elongate strip and male fastening means of the second side; whereby,
adjusting the distance between the first distal rod eye leg and first elongate strip modifies the tension of the fishing line; whereby,
a greater distance between the first distal rod eye leg and the first elongate strip increases tension of the fishing line.

12. A method of saturating fishing line, monofilament or braid using the wrap apparatus as claimed in any one of claims 1 to 7, the method comprising the steps of:
saturating a third elongate strip in water;
fastening the male fastening means of the second side of a third elongate strip to the first side of the first segment of the second elongate strip; wherein
the third elongate strip, first segment of the second elongate strip and the first elongate strip are fastened in a stacked configuration whereby;
the first elongate strip is secured about the face of a reel; wherein:
the female fastening means of the first side of said elongate strip is fixed to the male fastening means of the second side of the same first elongate strip;
the configuration forming a watertight seal about the rim and the skirt of a reel; whereby:
water is able to ingress into the fishing line, monofilament or braid, spooled on the reel from the saturated absorbent material of the third elongate strip.
